# EUROPEAN PATENT APPLICATION

(11) **EP 4 465 697 A2**
(43) Date of publication of application: **20.11.2024**
(21) Application number: 24205070.6
(22) Date of filing: 19.05.2020
(51) Int. Cl.: H04W 36/30

(54) **METHOD AND APPARATUS FOR WIRELESS COMMUNICATION**

(62) Divisional of application: 20936415.7
(71) Applicant: Lenovo (Beijing) Limited, Beijing 100085 (CN)
(72) Inventor: WU, Lianhai, 100028 Beijing (CN); HAN, Jing, 100024 Beijing (CN); HU, Jie, 100096 Beijing (CN); WANG, Haiming, 100011 Beijing (CN)
(74) Representative: Openshaw & Co.

(57) **Abstract**

Embodiments of the present disclosure relate to methods and apparatuses for wireless communication. According to some embodiments of the disclosure, a method may include: receiving, at a user equipment (UE), configuration information indicating a timer associated with fast master cell group (MCG) link recovery; transmitting an MCG failure information message in response to detecting a radio link failure on an MCG; and starting the timer associated with fast MCG link recovery. The sidelink resource of the first type of configured grant can be used when the timer is running. The UE assistance information and sidelink UE information can be allowed to be transmitted when the timer is running. In addition, sidelink configuration can be included in the RRC reconfiguration message for conditional handover command.

## Description

### TECHNICAL FIELD

Embodiments of the present application generally relate to wireless communication technology, especially to failure information report and conditional handover (CHO) in a wireless communication system.

### BACKGROUND

Wireless communication systems are widely deployed to provide various telecommunication services such as telephony, video, data, messaging, broadcasts, and so on. Wireless communication systems may employ multiple access technologies capable of supporting communication with multiple users by sharing available system resources (e.g., time, frequency, and power). Examples of wireless communication systems may include fourth generation (4G) systems such as long term evolution (LTE) systems, LTE-advanced (LTE-A) systems, or LTE-A Pro systems, and fifth generation (5G) systems which may also be referred to as new radio (NR) systems.

In the above wireless communication systems, a user equipment (UE) may communicate with another UE via a data path supported by an operator's network, e.g., a cellular or a Wi-Fi network infrastructure. The data path supported by the operator's network may include a base station (BS) and multiple gateways.

Some wireless communication systems may support sidelink (SL) communications, in which devices (e.g., UEs) that are relatively close to each other may communicate with one another directly via a SL, rather than being linked through the BS. The term "SL" may refer to a direct radio link established for communicating among devices, as opposed to communicating via the cellular infrastructure (uplink and downlink) as discussed above. The term "SL" may also be referred to as a sidelink communication link.

In addition, in 3rd Generation Partnership Project (3GPP) Release 16, a multi-radio dual connectivity (MR-DC) operation is supported. In MR-DC, a UE may be connected to a master node (MN) and a secondary node (SN). When a radio link failure (RLF) occurs at the UE between, for example, the UE and the MN or the UE and the SN, the UE may transmit a failure report, for example, a master cell group (MCG) failure report or a secondary cell group (SCG) failure report, to the network.

How to handle sidelink communications during a failure report procedure and a conditional handover (CHO) procedure has not been specifically discussed in 3GPP 5G NR technology. The industry desires a technology for handling sidelink communications during the above procedures.

### SUMMARY

According to some embodiments of the present application, a method may include: receiving, at a user equipment (UE), configuration information indicating a timer associated with fast master cell group (MCG) link recovery; transmitting an MCG failure information message in response to detecting a radio link failure on an MCG; and starting the timer associated with fast MCG link recovery.

According to some other embodiments of the present application, a method may include: transmitting, at a user equipment (UE), UE assistant information or a sidelink UE information message when a timer associated with fast master cell group (MCG) link recovery is not running.

According to some other embodiments of the present application, a method may include: receiving a radio resource control (RRC) reconfiguration message comprising a conditional RRC reconfiguration, an execution condition for a conditional handover (CHO), and a sidelink configuration; performing a CHO procedure when the execution condition for a CHO is met; and transmitting a RRC reconfiguration complete message in response to a completion of the CHO procedure.

Some embodiments of the present application also provide an apparatus, include: at least one non-transitory computer-readable medium having computer executable instructions stored therein, at least one receiving circuitry; at least one transmitting circuitry; and at least one processor coupled to the at least one non-transitory computer-readable medium, the at least one receiving circuitry and the at least one transmitting circuitry. The computer executable instructions are programmed to implement any method as stated above with the at least one receiving circuitry, the at least one transmitting circuitry and the at least one processor.

Embodiments of the present application provide technical solutions for handle sidelink communications during a failure report procedure and a conditional handover procedure, and can facilitate and improve the implementation of 5G NR technology.

### BRIEF DESCRIPTION OF THE DRAWINGS

In order to describe the manner in which advantages and features of the application can be obtained, a description of the application is rendered by reference to specific embodiments thereof, which are illustrated in the appended drawings. These drawings depict only example embodiments of the application and are not therefore to be considered limiting of its scope.
FIG. 1 illustrates a schematic diagram of a wireless communication system in accordance with some embodiments of the present application;
FIG. 2 illustrates an exemplary flowchart of a fast MCG link recovery procedure in accordance with some embodiments of the present application;
FIG. 2A illustrates an exemplary timeline of a RLF with a fast MCG link recovery procedure in accordance with some embodiments of the present application;
FIG. 3 illustrates an exemplary flowchart of a CHO procedure in accordance with some embodiments of the present application;
FIG. 4 illustrates a schematic diagram of a wireless communication system in accordance with some embodiments of the present application;
FIG. 5 illustrates an exemplary procedure for providing UE assistant information in accordance with some embodiments of the present application;
FIG. 6 illustrates an exemplary procedure for providing sidelink UE information in accordance with some embodiments of the present application;
FIG. 7 illustrates an exemplary procedure for transmitting failure information in accordance with some embodiments of the present application;
FIG. 8 illustrates an exemplary flowchart of a CHO procedure in accordance with some embodiments of the present application; and
FIG. 9 illustrates a block diagram of an exemplary apparatus in accordance with some embodiments of the present disclosure.

### DETAILED DESCRIPTION

The detailed description of the appended drawings is intended as a description of preferred embodiments of the present application and is not intended to represent the only form in which the present application may be practiced. It should be understood that the same or equivalent functions may be accomplished by different embodiments that are intended to be encompassed within the spirit and scope of the present application.

Reference will now be made in detail to some embodiments of the present application, examples of which are illustrated in the accompanying drawings. To facilitate understanding, embodiments are provided under specific network architecture and new service scenarios, such as 3GPP 5G, 3GPP LTE Release 8 and so on. It is contemplated that along with developments of network architectures and new service scenarios, all embodiments in the present application are also applicable to similar technical problems; and moreover, the terminologies recited in the present application may change, which should not affect the principle of the present application.

Next generation radio access network (NG-RAN) supports a multi-radio dual connectivity (MR-DC) operation. In the MR-DC operation, a UE with multiple transceivers may be configured to utilize resources provided by two different nodes connected via non-ideal backhauls. Wherein one node may provide NR access and the other one node may provide either evolved-universal mobile telecommunication system (UMTS) terrestrial radio access (UTRA) (E-UTRA) or NR access. One node may act as a master node (MN) and the other node may act as a secondary node (SN). The MN and SN are connected via a network interface (for example, an Xn interface as specified in 3GPP standard documents), and at least the MN is connected to the core network.

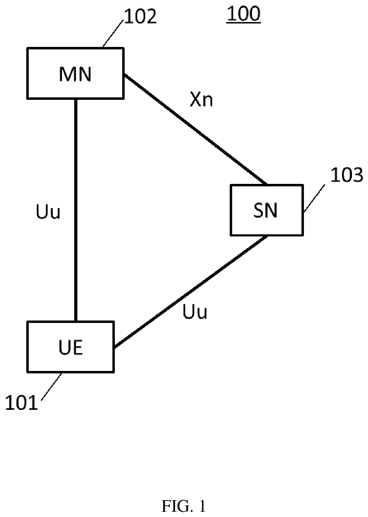

For example, FIG. 1 illustrates a schematic diagram of a wireless communication system in accordance with some embodiments of the present application.

As shown in FIG. 1, the wireless communication system 100 may be a dual connectivity system includes at least one user equipment (UE) 101, at least one MN 102, and at least one SN 103. In particular, the dual connectivity system in FIG. 1 includes one shown UE 101, one shown MN 102, and one shown SN 103 for illustrative purpose. Although a specific number of UEs 101, MNs 102, and SNs 103 are depicted in FIG. 1, it is contemplated that any number of UEs 101, MNs 102, and SNs 103 may be included in the wireless communication system 100.

Referring to FIG. 1, the UE 101 may connect to the MN 102 and the SN 103 via a network interface, for example, Uu interface as specified in 3GPP standard documents. The MN 102 and SN 103 may be connected with each other via a network interface, for example, the Xn interface as specified in 3GPP standard documents. The MN 102 may be connected to the core network via a network interface (not shown in FIG. 1). In some embodiments of the present application, the SN 103 may also be connected to the core network. The UE 102 may be configured to utilize resources provided by the MN 102 and SN 103 to perform data transmission, signaling transmission, or both.

The MN 102 may refer to a radio access node that provides a control plane connection to the core network. In some embodiments of the present application, in the E-UTRA-NR DC (EN-DC) scenario, the MN 102 may be an eNB. In some other embodiments of the present application, in the next generation E-UTRA-NR DC (NGEN-DC) scenario, the MN 102 may be an ng-eNB. In yet other embodiments of the present application, in the NR-DC scenario or the NR-E-UTRA DC (NE-DC) scenario, the MN 102 may be a gNB.

An MN may be associated with a master cell group (MCG). An MCG may refer to a group of serving cells associated with the MN, and may include a primary cell (PCell) and optionally one or more secondary cells (SCells). The PCell may provide a control plane connection to a UE (e.g., UE 101).

The SN 103 may refer to a radio access node without a control plane connection to the core network but providing additional resources to the UE 101. In some embodiments of the present application, in the EN-DC scenario, the SN 103 may be an en-gNB. In some other embodiments of the present application, in the NE-DC scenario, the SN 103 may be an ng-eNB. In yet other embodiments of the present application, in the NR-DC scenario or the NGEN-DC scenario, the SN 103 may be a gNB.

An SN may be associated with a secondary cell group (SCG). An SCG may refer to a group of serving cells associated with the SN, and may include a primary secondary cell (PSCell) and optionally one or more secondary cells (SCells).

The PCell of the MCG and the PSCell of the SCG may also be referred to as a special cell (SpCell).

In some embodiments of the present application, the UE 101 may include computing devices, such as desktop computers, laptop computers, personal digital assistants (PDAs), tablet computers, smart televisions (e.g., televisions connected to the Internet), set-top boxes, game consoles, security systems (including security cameras), vehicle on-board computers, network devices (e.g., routers, switches, and modems), or the like. In some other embodiments of the present application, the UE 101 may include a portable wireless communication device, a smart phone, a cellular telephone, a flip phone, a device having a subscriber identity module, a personal computer, a selective call receiving circuitry, or any other device that is capable of sending and receiving communication signals on a wireless network. In some other embodiments of the present application, the UE 101 may include wearable devices, such as smart watches, fitness bands, optical head-mounted displays, or the like. Moreover, the UE 101 may be referred to as a subscriber unit, a mobile, a mobile station, a user, a terminal, a mobile terminal, a wireless terminal, a fixed terminal, a subscriber station, a user terminal, or a device, or described using other terminology used in the art.

The UE 101 may be configured to monitor the MCG of the MN 102 and may detect MCG failures. In some embodiments of the present disclosure, the UE 101 may initiate a MCG recovery procedure (e.g., a fast MCG link recovery procedure) to inform a RLF on the MCG to the MN 102 via the SCG link (e.g., SN 103), such that the UE in a RRC_CONNECTED state may initiate the fast MCG link recovery procedure to quickly continue the RRC connection without performing a re-establishment procedure.

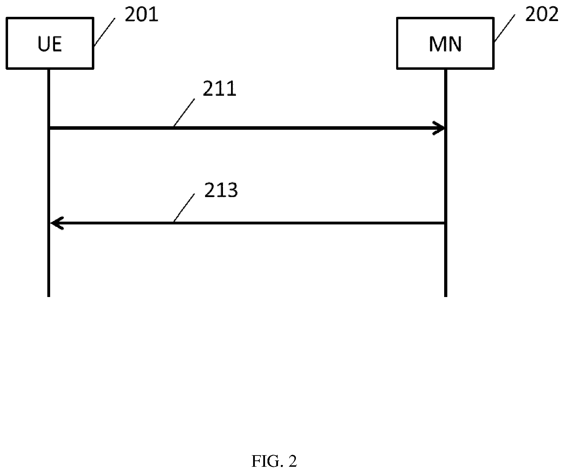

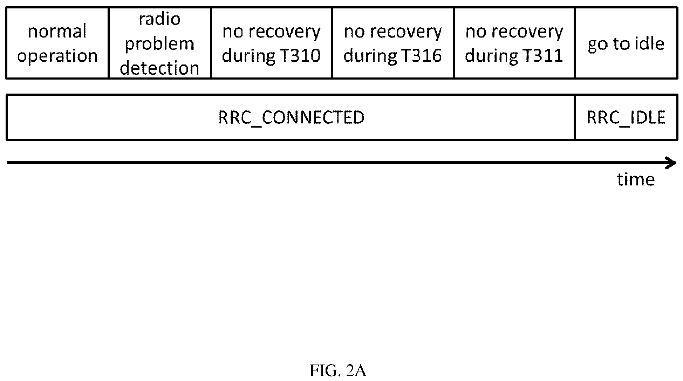

FIG. 2 illustrates an exemplary flowchart of a fast MCG link recovery procedure in accordance with some embodiments of the present application. In FIG. 2, a UE 201 may communicate with a MN (e.g., MN 202) and a SN (not shown in FIG. 2). In some examples, the UE 201 may function as a UE 101 in FIG. 1, and the MN 202 may function as an MN 102 in FIG. 1.

As shown in FIG. 2, in the case that a RLF on a MCG for the UE 201 happens, the UE 201 may initiate (or trigger) a fast MCG link recovery procedure. For example, in step 211, the UE 201 may transmit a MCG failure information message to the MN 202 in response to the RLF on MCG. In some embodiments of the present application, the RLF on the MCG may refer to the RLF happening in the PCell of the MCG. In some embodiments of the present application, the MCG failure information message associated with the RLF in step 211 may be a *MCGFailureInformation* message as specified in 3GPP standard documents. In some embodiments of the present application, the UE 201 may not directly transmit the MCG failure information message to the MN 202. Instead, the UE 201 may transmit the MCG failure information message associated with the RLF to a SN (e.g., the SN 103 shown in FIG. 1), and then the SN may transfer the MCG failure information message received from the UE 201 to the MN 202.

In some embodiments of the present application, the UE 201 may be configured with a split signaling radio bearer (SRB) 1 or SRB3 to report the MCG failure information when a RLF on the MCG happens. In the case that split SRB1 is configured (or SRB1 is configured as split SRB1), the UE 201 may submit the MCG failure information message to low layer(s) for transmission via SRB1 (i.e., split SRB1). In the case that SRB3 is configured, the UE 201 may submit the MCG failure information message to low layer(s) for transmission via SRB3. For example, the MCG failure information message may be encapsulated or embedded in a RRC message (e.g., an NR RRC message *ULInformationTransferMRDC* as specified in 3GPP standard documents) for transmission via SRB3.

When or after transmitting the MCG failure information message in step 211, the UE 201 may start a timer associated with fast MCG link recovery (hereinafter referred to as "link recovery timer"). In some embodiments of the present application, the link recovery timer may be timer T316 as specified in 3GPP standard documents.

After receiving the MCG failure information message, in step 213, the MN 202 may determine to keep, change, or release the failed radio link, and may transmit a response message to the UE 201. For example, in the case that the MN 202 determines to change or release the failed radio link, the MN 202 may transmit a RRC reconfiguration (e.g., a reconfiguration with sync) message or a RRC release message to the UE 201. The RRC reconfiguration message may include a handover (HO) command for a cell. In some embodiments of the present application, the handover command may be a *reconfigurationWithSync* configuration as specified in 3GPP standard documents. The MN 202 may not directly transmit the response message to the UE 201. Instead, the MN 202 may transmit the response message to a SN (e.g., the SN 103 shown in FIG. 1), and then the SN may transfer the response message to the UE 201.

In some embodiments of the present application, in the case that SRB3 is configured for transmitting the MCG failure information message, after receiving the response message from the MN 202, the SN may encapsulate the response message in a RRC message (e.g., a *DLInformationTransferMRDC* message as specified in 3GPP standard documents), and then transmit the RRC message to the UE 201.

In some embodiments of the present application, the MCG failure information message may indicate a failure type, which may indicate a link failure due to, for example, one of the following: (1) an expiry of a physical layer problem timer; (2) a random access problem; and (3) reaching a maximum number of retransmissions.

Failure type (1) may refer to the situation where a UE initiates the transmission of the MCG failure information message (e.g., as shown in step 211) in response to the expiry of a physical layer problem timer (e.g., T310 as specified in 3GPP standard documents). Failure type (2) may refer to the situation where a UE initiates the transmission of the MCG failure information message (e.g., as shown in step 211) to provide a random access problem indication from a medium access control (MAC) layer of a MCG. Failure type (3) may refer to the situation where a UE initiates the transmission of the MCG failure information message (e.g., as shown in step 211) to provide an indication from MCG radio link control (RLC) that the maximum number of retransmissions has been reached.

Before the link recovery timer expires, in the case that the UE 201 receives one of the RRC reconfiguration messages or the RRC release messages, the UE 201 shall stop the link recovery timer, which means that the fast MCG link recovery procedure is terminated. In the case that the UE 201 receives the RRC reconfiguration message including handover command for a cell, the UE may perform handover for the UE to the cell. In the case that the UE 201 receives the RRC release message, then the UE shall enter a RRC_IDLE state. In some embodiments of the present application, the UE may not receive any response message from the MN 202 before the link recovery timer expires. The UE 201 may perform a RRC re-establishment procedure after the link recovery timer expires.

FIG. 2A illustrates an exemplary timeline of a RLF with a fast MCG link recovery procedure in accordance with some embodiments of the present application. The embodiments of FIG. 2A may be performed by a UE (e.g., a UE 101 shown in FIG. 1 or a UE 201 shown in FIG. 2).

According to FIG. 2A, at the beginning, a UE may perform data transmission at the stage of normal operation. At a certain time, the UE may detect a radio problem when, for example, a MAC layer of the UE receives the N310 consecutive out-of-sync indication from a physical layer of the UE. This means that a radio link problem occurs. The UE may start a physical layer problem timer (e.g., timer T310). During the period of timer T310, in the case that the MAC layer of the UE receives the N311 consecutive in-sync indication from the physical layer of the UE, which means that the UE is successfully connected to a network, the UE may stop timer T310.

When timer T310 expires, which means no recovery during timer T310, the UE may initiate a fast MCG link recovery procedure. For example, the UE may perform the fast MCG link recovery procedure as shown in FIG. 2, and may start a link recovery timer (e.g., timer T316) associated with the fast MCG link recovery procedure. In the case that the UE receives RRC reconfiguration from the MN via the SN, the UE may stop timer T316, which means that the fast MCG link recovery procedure is terminated. Otherwise, in response to timer T316 expiry, which means no recovery during timer T316, the UE may perform a re-establishment procedure and start a timer (e.g., timer T311 as specified in 3GPP standard documents) associated with the re-establishment procedure.

When timer T311 expires, which means no recovery during timer T311, the UE may go to an idle state, e.g., a RRC_IDLE state. As shown in FIG. 2A, the UE is in a RRC _CONNECTED state before the expiry of timer T311, and the UE may enter into in a RRC_IDLE state in response to the expiry of timer T311.

In some embodiments of the present application, a UE may be configured with a conditional handover (CHO) procedure. The CHO procedure is defined as a handover procedure that is executed by the UE when one or more handover execution conditions are met. In the CHO procedure, a UE may start evaluating execution condition(s) after receiving the CHO configuration information, and stop evaluating the execution condition(s) during the CHO execution once the execution condition(s) is met.

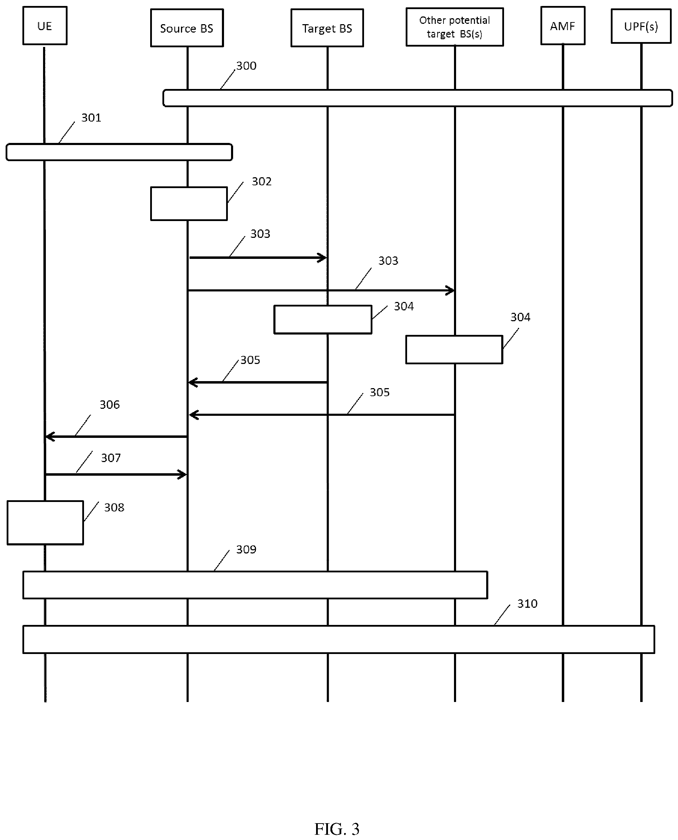

For example, FIG. 3 illustrates an exemplary flowchart of a CHO procedure in accordance with some embodiments of the present application. As shown in FIG. 3, it depicts a basic conditional handover scenario where neither the access and mobility management function (AMF) nor the user plane functions (UPFs) changes.

In FIG. 3, a UE is connected to a source base station (BS), which may operate under the control of core network entities (e.g., an AMF and a UPF(s)). In step 300, the AMF may provide the UE context of the UE to the source BS. The UE context may contain information regarding roaming and access restrictions of the UE.

In step 301, the source BS may transmit measurement configuration information to the UE. The UE may report the measurement result to the source BS based on the measurement configuration information.

In step 302, the source BS may decide to use a CHO for the UE, which may be based on the measurement result reported by the UE. In step 303, the source BS may transmit a CHO request message to one or more candidate BSs. For example, the one or more candidate BSs may at least include a target BS, and may further include other potential target BS(s). In step 304, the target BS (and other potential target BS(s)) may perform admission control to decide whether to allow the CHO of the UE after receiving the CHO request message from the source BS.

In step 305, based on the admission control result, at least one of the target BS and other potential target BS(s) may transmit a CHO response message to the source BS. The CHO response message may include CHO configuration for one or more candidate cells.

In step 306, the source BS may transmit a RRC reconfiguration message to the UE. The RRC reconfiguration message may include CHO configuration information indicating a set of CHO configurations and a set of execution conditions for a set of cells. Each cell of the set of cells may be referred to as a CHO candidate cell and is associated with a CHO configuration and an execution condition. Each CHO configuration may include the configuration of a respective CHO candidate cell generated by a respective candidate BS, and may include parameters for the UE to perform handover to the cell. For example, the CHO configuration associated with a cell may include parameters for the UE to access the cell and/or perform data transmission with the cell.

The set of execution conditions may be generated by the source BS. The execution condition may include one or two trigger conditions. For example, in the case that the execution condition includes one trigger condition, the trigger condition may be an A3 event or an A5 event as specified in 3GPP standard document TS38.331. In the case that the execution condition includes two trigger conditions, the two trigger conditions may be an A3 event and an A5 event as specified in 3GPP standard document TS38.331.

In addition, only a single reference signal (RS) type may be used for evaluating the execution condition of a single cell, and at most two different execution quantities can be configured simultaneously for evaluating the execution condition of the single cell. For example, the two different execution quantities may be reference signal receiving power (RSRP) and reference signal receiving quality (RSRQ), or RSRP and signal to interference plus noise ratio (SINR), or the like. In some embodiments of the present application, more than one execution condition may be satisfied, that is, more than one cell may be suitable for the UE's handover. In this case, the UE can select a cell for performing CHO based on the execution quantity.

After receiving the RRC reconfiguration message, in step 307, the UE may transmit a RRC reconfiguration complete message to the source BS.

In step 308, the UE may maintain the connection with the source BS and start evaluating the set of execution conditions for the set of cells. Before any execution condition is satisfied, when receiving a handover (HO) command without CHO configuration, the UE may perform the HO procedure regardless of any previously received CHO configuration information. Otherwise, in the case that at least one execution condition for at least one cell is satisfied, in step 309, the UE may detach from the source BS and perform (or apply) a CHO procedure to a cell (e.g., a cell corresponding to the target BS) selected from the at least one cell. The selected cell may be referred to as a target cell.

Performing a CHO procedure to the selected cell may include applying the corresponding CHO configuration for the selected cell. When performing the CHO procedure, e.g., from the time when the UE starts synchronization with the selected cell, the UE does not monitor the source BS anymore. The UE may complete the CHO procedure by transmitting a RRC reconfiguration complete message to the target cell.

In step 310, the UE, the source BS, the target BS, and the core network (e.g., the AMF and/or the UPF(s)) may perform data forwarding and path switch. For example, the target BS corresponding to the target cell may trigger the release of the resources at the source BS.

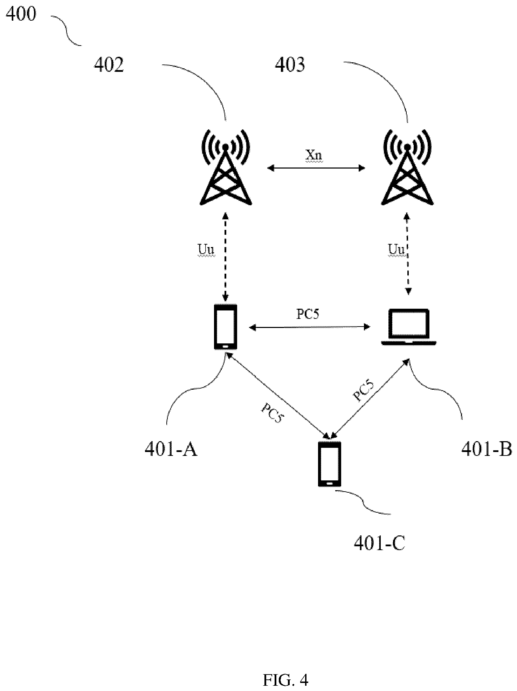

FIG. 4 illustrates a schematic diagram of a wireless communication system 400 in accordance with some embodiments of the present application.

As shown in FIG. 4, the wireless communication system 400 may support sidelink communications. In the context of the present application, sidelink communications may be categorized according to the wireless communication technologies adopted. For example, NR sidelink communications (specified in 3GPP specification TS 38.311) may refer to access stratum (AS) functionality enabling at least vehicle-to-everything (V2X) communications as defined in 3GPP specification TS 23.287 between neighboring UEs, using NR technology but not traversing any network node. V2X sidelink communications (specified in 3GPP specification TS 36.311) may refer to AS functionality enabling V2X communications as defined in 3GPP specification TS 23.285 between neighboring UEs, using E-UTRA technology but not traversing any network node. However, if being not specified, "sidelink communications" may refer to any of NR sidelink communications and V2X sidelink communications.

In FIG. 4, the wireless communication system 400 may include some BSs (e.g., BS 402 and BS 403) and some UEs (e.g., UE 401-A, UE 401-B, and UE 401-C). Although a specific number of UEs and BSs are depicted in FIG. 4, it is contemplated that any number of UEs and BSs may be included in the wireless communication system 400. The BS 402 may be a gNB and the BS 403 may be an ng-eNB. The UEs in FIG. 4 may function as the UEs shown in FIGS. 1-3.

The UE 401-A and UE 401-B may be in-coverage, for example, as shown in FIG. 4, the UE 401-A may be within the coverage of a BS 402, and the UE 401-B may be within the coverage of BS 403; and the UE 401-C may be out-of-coverage, for example, as shown in FIG. 4, the UE 401-C may be outside the coverage of both the BS 402 and BS 403. The UE 401A and UE 401-B may respectively connect to the BS 402 and BS 403 via a network interface, for example, Uu interface as specified in 3GPP standard documents. The BS 402 and BS 403 may be connected with each other via a network interface, for example, the Xn interface as specified in 3GPP standard documents. The UE 401-A, UE 401-B, and UE 401-C may be connected with each other respectively via, for example, a PC5 interface as specified in 3GPP standard documents.

Support of V2X services via the PC5 interface can be provided by NR sidelink communication and/or V2X sidelink communication. NR sidelink communication can support one of the following three types of transmission modes for a pair of a Source Layer-2 ID and a Destination Layer-2 ID: unicast transmission, groupcast transmission, and broadcast transmission. Sidelink communication transmission and reception over the PC5 interface are supported when the UE is either in-coverage or out-of-coverage.

For example, the UE 401-A, which is within the coverage of the BS 402, can perform sidelink transmission and reception (e.g., sidelink unicast transmission, sidelink groupcast transmission, or sidelink broadcast transmission) over a PC5 interface. The UE 401-C, which is outside the coverage of both the BS 402 and BS 403, can also perform sidelink transmission and reception over a PC5 interface.

A UE which supports sidelink communication or V2X communication may be referred to as a V2X UE. A V2X UE may be a cell phone, a vehicle, a roadmap device, a computer, a laptop, an IoT (internet of things) device or other type of device in accordance with some other embodiments of the present application.

A V2X UE can operate in different modes. At least two sidelink resource allocation modes are defined for sidelink communication. For example, mode 1 may refer to the situation where a base station schedules sidelink resource(s) to be used by the UE for sidelink transmission(s), and mode 2 may refer to the situation where a UE determines sidelink transmission resource(s) within a resource pool. The resource pool may be configured by a base station or network, or may be pre-configured according to a standard. In mode 2, the base station does not need to dynamically schedule the sidelink resources for the UE, and the UE decides the sidelink transmission resources and timing in the resource pool based on the measurement result and sensing result.

In mode 1, a UE may need to be in a RRC_CONNECTED state in order to transmit data. A base station can dynamically schedule resources to the UE via a physical downlink control channel (PDCCH) for NR sidelink communication. In addition, the base station can allocate sidelink resources to the UE with two types of configured sidelink grants (e.g., sidelink resources):
- sidelink configured grant type 1 (or type 1): RRC directly provides the configured sidelink grant only for NR sidelink communication; and
- sidelink configured grant type 2 (or type 2): RRC defines the periodicity of the configured sidelink grant while the PDCCH can either signal and activate the configured sidelink grant, or deactivate it.

For a UE performing NR sidelink communication, there can be more than one configured sidelink grant activated at a time on the carrier configured for sidelink transmission.

When a beam failure or a physical layer problem occurs on the Uu interface, a UE can continue using the resources of sidelink configured grant type 1. During a handover procedure, a UE can be provided with configured sidelink grants via a handover command. When configured sidelink grants are provided in the handover command, the UE may activate the resources of sidelink configured grant type 1 in response to reception of the handover command.

In mode 2, a UE can transmit data when the UE is either in-coverage or out-of-coverage. The UE may autonomously select a sidelink grant from a resource pool provided by system information (e.g., system information block (SIB)) or dedicated signaling while the UE inside the coverage of a BS or a pre-configured resource pool while the UE is outside the coverage of any BS.

For NR sidelink communication, the resource pool can be provided for a given validity area where the UE does not need to acquire a new resource pool while moving within the validity area, at least when this pool is provided by an SIB (for example, reuse valid area of an NR SIB). The UE may be allowed to temporarily use the UE autonomous resource selection method with random selection for sidelink transmission based on configuration of the exceptional transmission resource pool as specified in 3GPP specification TS 38.331.

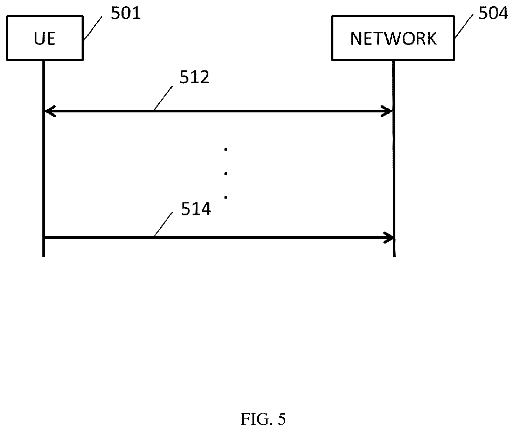

FIG. 5 illustrates an exemplary procedure for providing UE assistant information in accordance with some embodiments of the present application. Referring to FIG. 5, in step 512, a UE 501 and network 504 (e.g., a BS) may perform a RRC reconfiguration procedure therebetween. In step 514, the UE 501 may transmit UE assistant information associated with itself to the network 504.

The purpose of the procedure for providing the UE assistant information may include, for example, one of the following:
- the overheating assistance information of a UE;
- a preference of a UE on the discontinuous reception (DRX) parameters for power saving;
- a preference of a UE on the maximum aggregated bandwidth for power saving; and
- sidelink information.

In some embodiments of the present application, the sidelink information included in the UE assistant information may include configured grant assistance information for NR sidelink communication (also referred to as "UE assistance information for NR sidelink communication"). For example, *sl-UE-AssistanceInformationNR* as specified in 3GPP standard documents may be included in the UE assistance information.

In some embodiments of the present application, the sidelink information included in the UE assistant information may include configured grant assistance information for V2X sidelink communication (also referred to as "UE assistance information for V2X sidelink communication"). For example, *UEAssistanceInformationEUTRA* as specified in 3GPP standard documents may be included in the UE assistance information message.

In some embodiments of the present application, the configured grant assistance information may include the periodicity and offset information for sidelink communication of the UE. For example, the configured grant assistance information may indicate a periodicity of a sidelink resource is 10ms and the offset of the sidelink resource is 2ms with respect to a reference point.

UE assistance information for NR sidelink communication may be designed to indicate the traffic characteristics of sidelink logical channel(s) that are setup for NR sidelink communication. A UE capable of providing configured grant assistance information for NR sidelink communication in a RRC_CONNECTED state may initiate the above procedure under certain conditions including, for example, in response to the UE being configured to provide traffic pattern information and in response to a change of the traffic pattern of the UE.

UE assistance information for V2X sidelink communication may indicate traffic characteristics of sidelink logical channel(s) that are setup for V2X sidelink communication. For example, it may be used to inform the network of the UE's semi-persistent scheduling (SPS) assistance information for V2X sidelink communication.

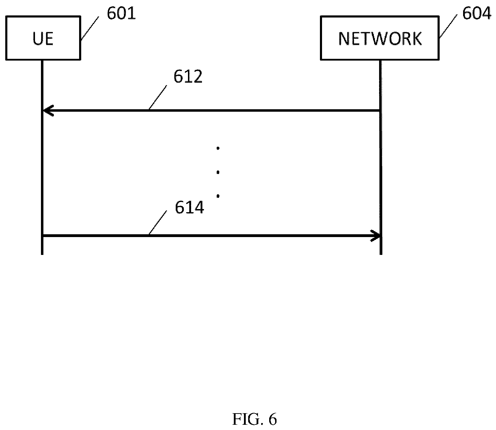

FIG. 6 illustrates an exemplary procedure for providing sidelink UE information in accordance with some embodiments of the present application. In FIG. 6, a UE 601 is connected to a network 604 (e.g., a BS).

In some embodiments of the present application, the sidelink UE information may be sidelink UE information for NR sidelink communication. In these embodiments, in step 612, the UE 601 may receive a SIB from the network 604. In some examples, the SIB may be SIB 12. In step 614, the UE 601 may transmit sidelink UE information for NR sidelink communication to the network 604. The sidelink UE information may be transmitted in a sidelink UE information message, for example, *SidelinkUEInformationNR* as specified in 3GPP standard documents. Such message may also be referred to as sidelink UE information message for NR sidelink communication.

The purpose of the above procedure may be, for example, to inform the network that the UE:
- is interested or no longer interested in receiving NR sidelink communication;
- is requesting assignment or release of transmission resource(s) for NR sidelink communication;
- is reporting parameters and QoS profiles(s) related to NR sidelink communication;
- is reporting that a sidelink radio link failure has been detected; or
- any combination thereof.

A UE capable of NR sidelink communication that is in a RRC _CONNECTED state may initiate the above procedure to indicate that the UE is (interested in) receiving NR sidelink communication in several cases. These cases may include: 1) in the case of successful connection establishment or resuming, 2) in the case of a change of interest, or 3) in the case of a change to a PCell providing SIB 12 including parameters such as *sl-ConfigCommonNR* as specified in 3GPP standard documents.

A UE capable of NR sidelink communication may initiate the procedure to request assignment of dedicated resources for NR sidelink communication transmission. A UE capable of NR sidelink communication may initiate the procedure to report to the network that a sidelink radio link failure or sidelink RRC reconfiguration failure has been declared.

In some embodiments of the present application, the sidelink UE information may be sidelink UE information for NR sidelink communication. In these embodiments, in step 612, the UE 601 may receive a SIB from the network 604. In some examples, the SIB may be SIB 13 or SIB 14. In step 614, the UE 601 may transmit sidelink UE information for V2X sidelink communication to the network 604. The sidelink UE information may be transmitted in a sidelink UE information message, for example, *SidelinkUEInformationEUTRA* as specified in 3GPP standard documents. Such message may also be referred to as sidelink UE information message for E-UTRA sidelink communication. The initiation and the procedure for the transmission of the sidelink UE information message may follow the procedure specified for V2X sidelink communication in 3GPP specification TS 36.331.

The purpose of the above procedure may, for example, include one or more of the following: to inform the network that the UE is interested or no longer interested in receiving V2X sidelink communication, to request assignment or release of transmission resource(s) for V2X sidelink communication, and to report parameters related to V2X sidelink communication.

As detailed above, a UE may initiate a procedure to transmit UE assistance information or sidelink UE information to the network under certain circumstances. A UE with multi-connectively (e.g., dual-connectivity) may initiate a failure report procedure (e.g., a fast MCG link recovery procedure) when a RLF occurs. Embodiments of the present application provide solutions for handling UE assistance information and sidelink UE information during a failure report procedure.

Moreover, a UE may be configured with resources for sidelink communication. For example, the sidelink resources may be indicated by sidelink configured grants (e.g., by *rrc-ConfiguredSidelinkGrant* as specified in 3GPP standard documents). Embodiments of the present application provide solutions for handling the sidelink resources during a failure report procedure.

In addition, embodiments of the present application provide solutions for handling sidelink configuration during a conditional handover procedure.

More details on embodiments of the present application will be illustrated in the following text in combination with the appended drawings.

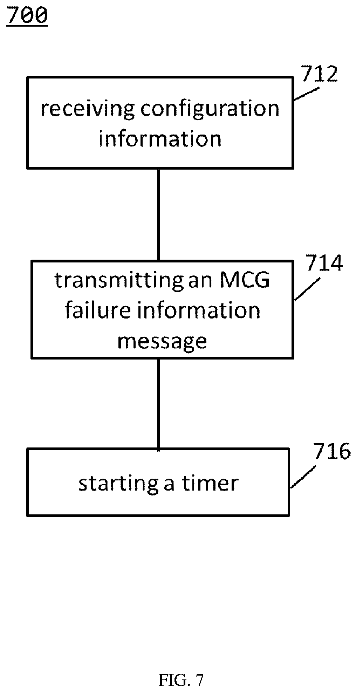

FIG. 7 illustrates an exemplary procedure 700 of failure information transmission according to some embodiments of the present disclosure. Details described in all of the foregoing embodiments of the present disclosure are applicable for the embodiments shown in FIG. 7.

The exemplary procedure 700 shows a procedure of a UE (e.g., UE 101 in FIG. 1). The UE may be in a MR-DC scenario where the UE is connected to an MN (e.g., MN 102 in FIG. 1) and an SN (e.g., SN 103 in FIG. 1).

In step 712, the UE may receive configuration information from the network (e.g., the MN connected to the UE). The configuration information may be associated with a fast MCG link recovery procedure. For example, the configuration information may indicate a timer associated with fast MCG link recovery (e.g., timer T316). In some embodiments of the present application, the UE may also be configured with sidelink communication. For example, the UE may be configured with resources of sidelink configured grant type 1, resources of sidelink configured grant type 2, or both.

At a certain time, the UE may detect a radio link failure on the MCG associated with the MN connected to the UE. The UE may then initiate a fast MCG link recovery procedure as described above with respect to FIGS. 2 and 2A. For example, in step 714, the UE may transmit an MCG failure information message in response to detecting the radio link failure on the MCG. The MCG failure information message may be transmitted via the SN to the MN. In step 716, the UE may start a timer indicated in the configuration information received in step 712. For example, the UE may start the timer associated with fast MCG link recovery.

In some embodiments of the present application, the UE may release the configured sidelink resources or grants during the fast MCG link recovery procedure. For example, the UE may be configured with resources of sidelink configured grant type 1. In some instances, the UE (e.g., the lower layers such as the physical layer and the MAC layer of the UE) may release such resources in response to the start of the timer associated with the fast MCG link recovery. For example, the UE may release such resources at any time when the timer associated with the fast MCG link recovery is running or when (or after) the timer associated with the fast MCG link recovery starts.

In some embodiments of the present application, the UE may be allowed to use the configured sidelink resources or grants during the fast MCG link recovery procedure. For example, the UE may be configured with resources of sidelink configured grant type 1. The UE may perform sidelink communication using such resources when the timer associated with the fast MCG link recovery is running.

In some embodiments of the present application, the UE may be allowed to transmit UE assistance information during a fast MCG link recovery procedure. The UE may initiate the procedure for providing the UE assistance information when the timer associated with the fast MCG link recovery is running. For example, when the timer associated with the fast MCG link recovery is running, the UE transmits the UE assistant information under certain conditions including, for example, in the case of the UE being configured to provide traffic pattern information and in the case of a change of the traffic pattern of the UE.

As stated above, a UE may be configured with a split SRB1 or SRB3. In the case that split SRB1 is configured at a UE, the UE may transmit the UE assistant information on SRB 1 when the timer associated with the fast MCG link recovery is running. For example, the UE may submit the UE assistant information to low layer(s) for transmission via SRB1 (i.e., split SRB1). In the case that SRB3 is configured at the UE, the UE may transmit the UE assistant information on SRB3 when the timer associated with the fast MCG link recovery is running. For example, the UE assistant information may be encapsulated or embedded in a RRC message (e.g., an uplink information transfer message such as *ULInformationTransferMRDC* as specified in 3GPP standard documents) for transmission via SRB3.

In some embodiments of the present application, the UE may be allowed to transmit sidelink UE information during a fast MCG link recovery procedure. The UE may initiate the procedure for providing the sidelink UE information when the timer associated with the fast MCG link recovery is running.

For example, when the timer associated with the fast MCG link recovery is running, the UE may transmit the sidelink UE information under certain purposes including, for example, to inform the network that the UE is interested or no longer interested in receiving sidelink communication, to request assignment or release of transmission resource(s) for sidelink communication, to report parameters related to sidelink communication, and to report that a radio link failure on the sidelink has been detected.

In some examples, the sidelink UE information message may be used for NR sidelink communication. In some other examples, the sidelink UE information message may be used for E-UTRA sidelink communication.

As stated above, a UE may be configured with a split SRB1 or SRB3. In the case that split SRB1 is configured at a UE, the UE may transmit the sidelink UE information message on SRB1 when the timer associated with the fast MCG link recovery is running. For example, the UE may submit the sidelink UE information message to low layer(s) for transmission via SRB1 (i.e., split SRB 1). In the case that SRB3 is configured at the UE, the UE may transmit the sidelink UE information message on SRB3 when the timer associated with the fast MCG link recovery is running. For example, the sidelink UE information message may be encapsulated or embedded in a RRC message (e.g., an uplink information transfer message such as *ULInformationTransferMRDC* as specified in 3GPP standard documents) for transmission via SRB3.

In some embodiments of the present application, the UE may receive a RRC reconfiguration message, for example, from the MN via the SN. In the embodiments where the UE is allowed to transmit the UE assistant information, sidelink UE information, or both during the fast MCG link recovery procedure, the UE may, under certain conditions, maintain (not stop) the timer associated with fast MCG link recovery in response to receiving the RRC reconfiguration message. For example, the UE may maintain the timer associated with fast MCG link recovery when: (1) the RRC reconfiguration message only includes configuration for sidelink communication, (2) the RRC reconfiguration message does not include reconfiguration with synchronization; or (3) the RRC reconfiguration message includes an indication of maintaining the timer associated with fast MCG link recovery. Otherwise, the UE may stop the timer associated with fast MCG link recovery.

In some embodiments of the present application, a UE may not be allowed to transmit the UE assistant information and sidelink UE information during the fast MCG link recovery procedure. In these embodiments of the present application, the UE may transmit the UE assistant information or the sidelink UE information message when the timer associated with fast MCG link recovery is not running.

It should be appreciated by persons skilled in the art that the sequence of the operations in exemplary procedure 700 may be changed and some of the operations in exemplary procedure 700 may be eliminated or modified, without departing from the spirit and scope of the disclosure.

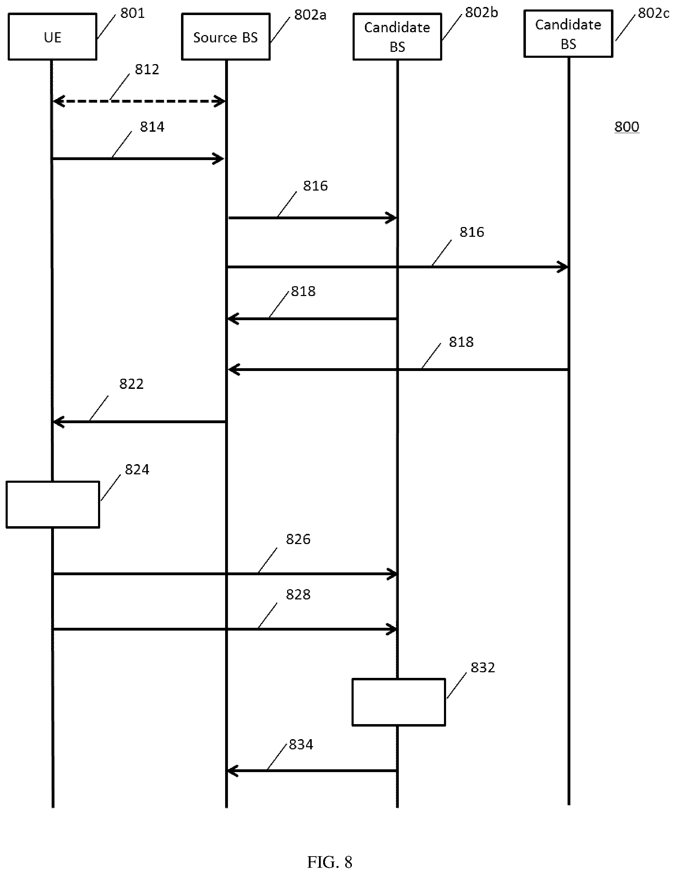

FIG. 8 illustrates an exemplary flowchart of a CHO procedure 800 in accordance with some embodiments of the present application. Details described in all of the foregoing embodiments of the present disclosure are applicable for the embodiments shown in FIG. 8. For example, the description with respect to FIG. 3 may be applied to FIG. 8.

As shown in FIG. 8, a UE (e.g., UE 801) is connected to a BS (e.g., source BS 802a). In step 812 (denoted by dotted arrow as an option), the UE 801 and source BS 802a may communicate with each other to, for example, perform data transmission. In some examples, the source BS 802a may transmit measurement configuration information to the UE 801. In step 814, the UE 801 may report measurement results (e.g., RSRP, RSRQ, or the like) to the source BS 802a. The description with respect to step 301 in FIG. 3 may be applied to step 814. After receiving the measurement results, the source BS 802a may decide to perform a CHO for the UE 801. In step 816, the source BS 802a may transmit a CHO request message to one or more candidate BSs (e.g., candidate BS 802b and candidate BS 802c).

In step 818, the source BS 802a may receive a CHO response message (e.g., handover acknowledgement) from one or more candidate BSs (e.g., the candidate BS 802b and candidate BS 802c). Each handover acknowledgement from a corresponding candidate BS may include a conditional RRC reconfiguration. In some embodiments of the present disclosure, the CHO response message may also include a sidelink configuration for a UE. The sidelink configuration may be included in the conditional RRC reconfiguration. The sidelink configuration may include configured sidelink grants to a UE. The configured sidelink grants may be of sidelink configured grant type 1, sidelink configured grant type 2, or both.

After receiving the CHO response message, the source BS 802a may generate one or more execution conditions for handing-over to the candidate BS 802b and candidate BS 802c. In step 822, the source BS 802a may transmit to UE 801 RRC reconfiguration message including the conditional RRC reconfiguration(s), the execution conditions for a CHO, and the sidelink configuration(s). The UE 801 may store the RRC reconfiguration message. The UE 801 may apply the sidelink configuration at later time, as will be described below.

In step 824, the UE 801 may maintain the connection with the source BS 802a and start evaluating the execution conditions. When at least one execution condition is met, the UE 801 may detach from the source BS 802a. The UE 801 may then perform (or apply) a CHO procedure to a target BS (e.g., candidate BS 802b), and may access to the candidate BS 802b in step 826. Performing the CHO procedure may include applying the conditional RRC reconfiguration associated with a target BS and applying the sidelink configuration associated with the target BS. In some embodiments of the present disclosure, the sidelink configuration may indicate resources of sidelink configured grant type 1. The UE may activate the resources of sidelink configured grant type 1.

In step 828, the UE may transmit a RRC reconfiguration complete message to the candidate BS 802b. In step 832, the candidate BS 802b may perform a path switch procedure with respect to the core network entities (e.g., an AMF). In step 834, the candidate BS 802b may inform the source BS 802a that the handover is successfully completed.

It should be appreciated by persons skilled in the art that the sequence of the operations in exemplary procedure 800 may be changed and some of the operations in exemplary procedure 800 may be eliminated or modified, without departing from the spirit and scope of the disclosure.

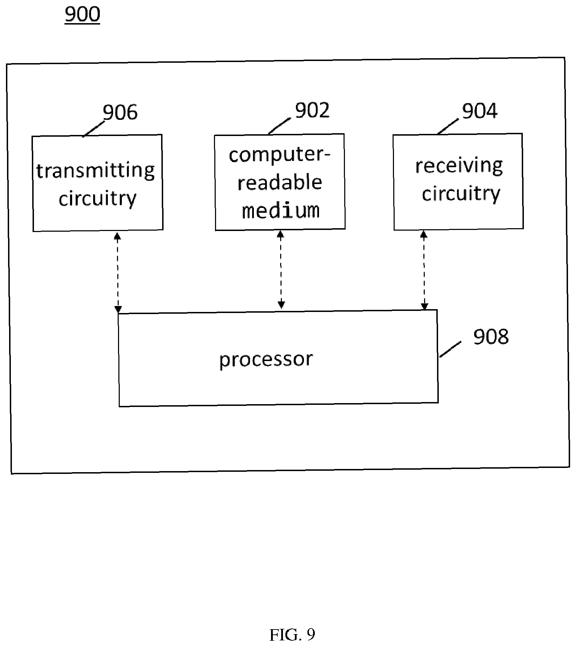

FIG. 9 illustrates an example block diagram of an apparatus 900 according to some embodiments of the present disclosure. The apparatus 900 may be a BS or a UE.

Referring to FIG. 9, the apparatus 900 may include at least one non-transitory computer-readable medium 902, at least one receiving circuitry 904, at least one transmitting circuitry 906, and at least one processor 908. In some embodiment of the present application, at least one receiving circuitry 904 and at least one transmitting circuitry 906 and be integrated into at least one transceiver. The at least one processor 908 may be coupled to the at least one non-transitory computer-readable medium 902, the at least one receiving circuitry 904 and the at least one transmitting circuitry 906. In some embodiments of the present disclosure, the apparatus 900 may further include an input device, a memory, and/or other components.

In some embodiments of the present disclosure, the at least one non-transitory computer-readable medium 902 may have stored thereon computer-executable instructions to cause the at least one processor 908 to implement the operations, steps, or methods with respect to the UEs as described above. For example, the computer-executable instructions, when executed, cause the at least one processor 908 interacting with the at least one receiving circuitry 904 and the at least one transmitting circuitry 906, so as to perform the steps with respect to the UEs depicted in FIGS. 1-3 and 5-8. In some examples, the at least one receiving circuitry 904 may receive configuration information indicating a timer associated with fast MCG link recovery. The at least one transmitting circuitry 906 may transmit an MCG failure information message in response to detecting a radio link failure on an MCG. The at least one processor 908 may start the timer associated with fast MCG link recovery.

In some embodiments of the present disclosure, the at least one non-transitory computer-readable medium 902 may have stored thereon computer-executable instructions to cause the at least one processor 908 to implement the operations, steps, or methods with respect to the BSs as described above. For example, the computer-executable instructions, when executed, cause the at least one processor 908 interacting with the at least one receiving circuitry 904 and the at least one transmitting circuitry 906, so as to perform the steps with respect to the UEs depicted in FIGS. 1-3 and 5-8.

Those having ordinary skill in the art would understand that the steps of a method described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. Additionally, in some aspects, the steps of a method may reside as one or any combination or set of codes and/or instructions on a non-transitory computer-readable medium, which may be incorporated into a computer program product.

While this disclosure has been described with specific embodiments thereof, it is evident that many alternatives, modifications, and variations may be apparent to those skilled in the art. For example, various components of the embodiments may be interchanged, added, or substituted in the other embodiments. Also, all of the elements of each figure are not necessary for the operation of the disclosed embodiments. For example, one of ordinary skill in the art of the disclosed embodiments would be enabled to make and use the teachings of the disclosure by simply employing the elements of the independent claims. Accordingly, embodiments of the disclosure as set forth herein are intended to be illustrative, not limiting. Various changes may be made without departing from the spirit and scope of the disclosure.

In this document, the terms "includes", "including", or any other variation thereof, are intended to cover a non-exclusive inclusion, such that a process, method, article, or apparatus that includes a list of elements does not include only those elements but may include other elements not expressly listed or inherent to such process, method, article, or apparatus. An element proceeded by "a", "an", or the like does not, without more constraints, preclude the existence of additional identical elements in the process, method, article, or apparatus that includes the element. Also, the term "another" is defined as at least a second or more. The term "having" and the like, as used herein, are defined as "including."

Further aspects of the invention are provided by the subject matter of the following clauses: **[00123]**
1. A method, comprising:
   receiving, at a user equipment (UE), configuration information indicating a timer associated with fast master cell group (MCG) link recovery;
   transmitting an MCG failure information message in response to detecting a radio link failure on an MCG; and
   starting the timer associated with fast MCG link recovery.
2. The method of clause 1, further comprising:
   when a sidelink resource of a first type of configured grant is configured, releasing the sidelink resource of the first type of configured grant in response to the start of the timer associated with fast MCG link recovery.
3. The method of clause 1, further comprising:
   when a sidelink resource of a first type of configured grant is configured, releasing the sidelink resource of the first type of configured grant when the timer associated with fast MCG link recovery is running.
4. The method of clause 1, further comprising:
   when a sidelink resource of a first type of configured grant is configured, performing sidelink communication using the sidelink resource of the first type of configured grant when the timer associated with fast MCG link recovery is running.
5. The method of clause 1, further comprising:
   transmitting UE assistant information when the timer associated with fast MCG link recovery is running.
6. The method of clause 5, wherein the UE assistance information is encapsulated in a radio resource control (RRC) message and is transmitted on signaling radio bearer 3 (SRB3) when the SRB3 is configured at the UE.
7. The method of clause 5, wherein the UE assistance information is transmitted on signaling radio bearer 1 (SRB1) when split SRB1 is configured at the UE.
8. The method of clause 1, further comprising:
   transmitting a sidelink UE information message when the timer associated with fast MCG link recovery is running.
9. The method of clause 8, wherein the sidelink UE information message is for new radio sidelink communication or the sidelink UE information message is for E-UTRA sidelink communication.
10. The method of clause 8, wherein the sidelink UE information message is encapsulated in a radio resource control (RRC) message and is transmitted on signaling radio bearer 3 (SRB3) when the SRB3 is configured at the UE.
11. The method of clause 6 or 10, wherein the RRC message is an uplink information transfer message for multi-radio dual connectivity (MR-DC).
12. The method of clause 8, wherein the sidelink UE information message is transmitted on signaling radio bearer 1 (SRB1) when split SRB1 is configured at the UE.
13. The method of clause 5 or 8, further comprising:
   receiving a radio resource control (RRC) reconfiguration message; and
   maintaining the timer associated with fast MCG link recovery when:
      the RRC reconfiguration message only comprises configuration for sidelink communication; or
      the RRC reconfiguration message does not comprise reconfiguration with synchronization; or
      the RRC reconfiguration message including an indication of maintaining the timer associated with fast MCG link recovery.
14. A method, comprising:
   transmitting, at a user equipment (UE), UE assistant information or a sidelink UE information message when a timer associated with fast master cell group (MCG) link recovery is not running.

## Claims

1. A method, comprising:
receiving a radio resource control, RRC, reconfiguration message comprising a conditional RRC reconfiguration, an execution condition for a conditional handover, CHO, and a sidelink configuration;
performing a CHO procedure when the execution condition for a CHO is met; and
transmitting a RRC reconfiguration complete message in response to a completion of the CHO procedure.

2. The method of Claim 1, wherein the conditional RRC reconfiguration includes the sidelink configuration, and the method further comprises:
storing the sidelink configuration in response to the reception of conditional RRC reconfiguration.

3. The method of Claim 1, wherein performing the CHO procedure comprises:
applying the conditional RRC reconfiguration; and
applying the sidelink configuration.

4. The method of Claim 1, wherein the sidelink configuration indicates a sidelink resource of a first type of configured grant, and applying the sidelink configuration comprises:
activating the sidelink resource of the first type of configured grant.

5. A user equipment, UE, for wireless communication, the UE comprising a processor configured to cause the UE to:
receive a radio resource control, RRC, reconfiguration message comprising a conditional RRC reconfiguration, an execution condition for a conditional handover, CHO, and a sidelink configuration;
perform a CHO procedure when the execution condition for a CHO is met; and
transmit a RRC reconfiguration complete message in response to a completion of the CHO procedure.

6. The UE of Claim 5, wherein the conditional RRC reconfiguration includes the sidelink configuration, and the processor is configured to cause the UE to:
store the sidelink configuration in response to the reception of conditional RRC reconfiguration.

7. The UE of Claim 5, wherein the processor is configured to cause the UE to perform the CHO procedure by:
applying the conditional RRC reconfiguration; and
applying the sidelink configuration.

8. The UE of Claim 1, wherein the sidelink configuration indicates a sidelink resource of a first type of configured grant, and the processor is configured to cause the UE to apply the sidelink configuration by:
activating the sidelink resource of the first type of configured grant.

9. A processor for wireless communication, the processor being configured to:
receive a radio resource control, RRC, reconfiguration message comprising a conditional RRC reconfiguration, an execution condition for a conditional handover, CHO, and a sidelink configuration;
perform a CHO procedure when the execution condition for a CHO is met; and
transmit a RRC reconfiguration complete message in response to a completion of the CHO procedure.
